(19) Europäisches Patentamt
European Patent Office
Office européen des brevets

(11) EP 0 688 839 B1

(12) EUROPÄISCHE PATENTSCHRIFT

(45) Veröffentlichungstag und Bekanntmachung des Hinweises auf die Patenterteilung:
**24.03.1999 Patentblatt 1999/12**

(51) Int Cl.$^6$: **C09D 11/10**

(21) Anmeldenummer: **95108712.1**

(22) Anmeldetag: **07.06.1995**

# (54) Hochtemperaturbeständige flexible Siebdruckfarben

High temperature stable, flexible silk screen printing inks

Encres d'impression sérigraphique flexibles et stables à haute température

(84) Benannte Vertragsstaaten:
**BE DE ES GB IT NL**

(30) Priorität: **20.06.1994 DE 4421561**

(43) Veröffentlichungstag der Anmeldung:
**27.12.1995 Patentblatt 1995/52**

(73) Patentinhaber: **BAYER AG**
**51368 Leverkusen (DE)**

(72) Erfinder:
- **Bier, Peter, Dr.**
  **D-47800 Krefeld (DE)**
- **Wank, Joachim**
  **D-41541 Dormagen (DE)**
- **Capellen, Peter**
  **D-47803 Krefeld (DE)**

(56) Entgegenhaltungen:
- **PATENT ABSTRACTS OF JAPAN vol. 017, no. 643 (P-1651), 29.November 1993 & JP 05 210317 A (FUJITSU LTD), 20.August 1993,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 688 839 B1

Printed by Jouve, 75001 PARIS (FR)

## Beschreibung

Der Siebdruck ist ein vielseitiges und universell anwendbares Druckverfahren. Selbstverständlich müssen die Siebdruckfarben der jeweiligen Anwendung und dem bedruckten Substrat angepaßt sein. Siebdruckfarben enthalten - wie alle Druckfarben, Lacke und Beschichtungsmittel - viele Komponenten, die man grob in flüchtige und nichtflüchtige einteilen kann.

Zu den nichtflüchtigen Komponenten zählen Bindemittel, Pigmente, Füllstoffe und Hilfsmittel, die meist nur in sehr geringen Mengen benötigt werden für eine problemlose Verarbeitung jedoch unentbehrlich sind. Die flüchtigen Bestandteile sind im wesentlichen organische Lösemittel, aber auch Wasser. Die nichtflüchtigen Bindemittel sorgen dafür, daß die Farbe am Substrat verankert wird, damit der fertige Druck Beanspruchungen durch Abrieb, Hitze und mechanische Verbiegung widersteht.

Es werden also (z.B. für das abriebfeste Dekorieren von Spritzgußteilen durch Folienhinterspritzung) Bindemittel benötigt, die bei den hohen Temperaturen des Spritzgießens nicht anschmelzen, gleichzeitig fest am Substrat haften und flexibel sind. Diese Anforderungen werden von speziellen hochwärmeformbeständigen Polycarbonaten erfüllt.

Gegenstand der Erfindung sind hochtemperaturbeständige flexible Siebdruckfarben, die

A) als Bindemittel mindestens ein Polycarbonat auf Basis von geminal disubstituierten Dihydroxydiphenylcycloalkanen und

B) als Lösungsmittel vorzugsweise halogenfreie Lösungsmittel bzw. Lösungsmittelgemische enthalten.

Geeignete Polycarbonate A sind bevorzugt hochmolekulare, thermoplastische, aromatische Polycarbonate mit $\overline{M}_w$ (Gewichtsmittel des Molekulargewichts) von mindestens 10 000, vorzugsweise von 20 000 bis 300 000, die bifunktionelle Carbonatstruktureinheiten der Formel (I) enthalten,

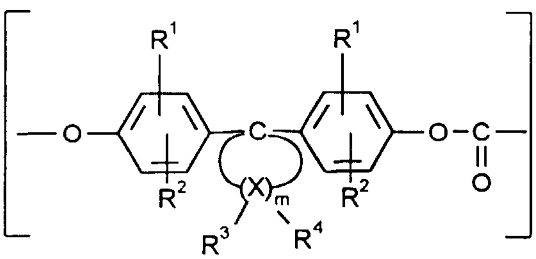

(I)

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | eine ganze Zahl von 4 bis 7, bevorzugt 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X, $R^3$ und $R^4$ gleichzeitig Alkyl bedeuten.

Ausgangsprodukte für die Polycarbonate A sind Dihydroxydiphenylcycloalkane der Formel (Ia)

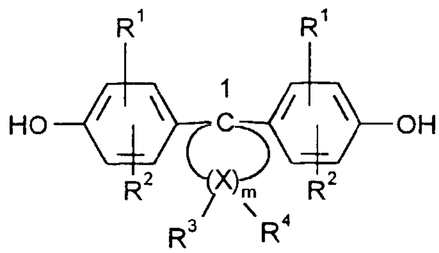 (Ia),

worin

X, $R^1$, $R^2$, $R^3$, $R^4$ und m die für die Formel (I) genannte Bedeutung haben.

Bevorzugt sind an 1-2 Atomen X, insbesondere nur an einem Atom X, $R^3$ und $R^4$ gleichzeitig Alkyl.

Bevorzugter Alkylrest ist Methyl; die X-Atome in α-Stellung zu dem Diphenyl-substituierten C-Atom (C-1) sind bevorzugt nicht dialkylsubstituiert, dagegen ist die Alkyldisubstitution in β-Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel (Ia)), beispielsweise die Diphenole der Formeln (Ib) bis (Id),

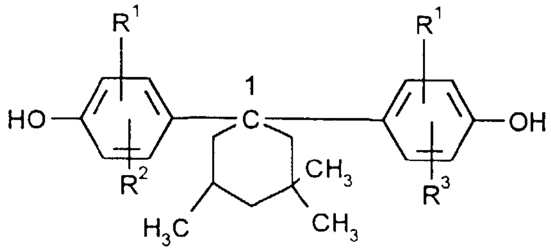 (Ib),

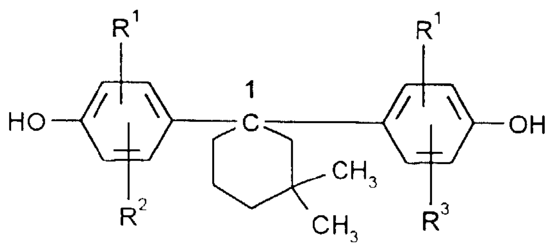 (Ic),

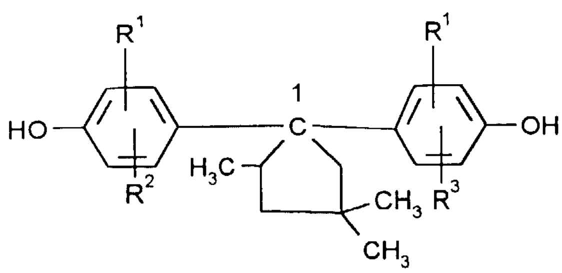 (Id),

wobei das 1,1-Bis-(4-hydroxyphenyl)-3,3,5-trimethylcyclohexan (Formel (Ib) mit $R^1$ und $R^2$ gleich H) besonders bevorzugt ist. Die Polycarbonate A können gemäß der deutschen Patentanmeldung P 3 832 396.6 (Le A 26 344) aus Diphenolen der Formel (Ia) hergestellt werden.

Es können sowohl ein Diphenol der Formel (Ia) unter Bildung von Homopolycarbonaten als auch mehrere

Diphenole der Formel (Ia) unter Bildung von Copolycarbonaten verwendet werden.

Außerdem können die Diphenole der Formel (Ia) auch im Gemisch mit anderen Diphenolen, beispielsweise mit denen der Formel (Ie)

$$HO - Z - OH \qquad (Ie),$$

zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Beispiele der Diphenole der Formel (Ie) sind:
Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)sulfoxide, α,α'-Bis-(hydroxyphenyl)-diisopropylbenzole sowie deren kernalkylierte und kernhalogenierte Verbindungen.

Diese und weitere geeignete Diphenole sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, α,α-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, α,α-Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ie) sind beispielsweise:
2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ie), soll zwischen 100 Mol-% (Ia) zu 0 Mol-% (Ie) und 2 Mol-% (Ia) zu 98 Mol-% (Ie), vorzugsweise zwischen 100 Mol-% (Ia) zu 0 Mol-% (Ie) und 10 Mol-% (Ia) zu 90 Mol-% (Ie) und insbesondere zwischen 100 Mol-% (Ia) zu 0 Mol-% (Ie) und 30 Mol-% (Ia) zu 70 Mol-% (Ie) und ganz besonders zwischen 100 Mol-% (Ia) zu 0 Mol-% (Ie) und 50 Mol-% (Ia) zu 50 Mol-% (Ie) liegen.

Die hochmolekularen Polycarbonate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die erfindungsgemäßen Polycarboante können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind:

Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate A dienen monofunktionelle Verbindungen in üblichen Konzentraten. Geeignete Verbindungen sind z.B. Phenol, tert.-Butylphenole oder andere Alkylsubstituierte Phenole. Zur Regelung des Molekulargewichts sind insbesondere kleine Mengen Phenole der Formel (If) geeignet

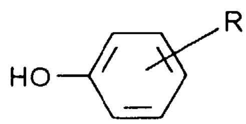

(If),

worin

R einen verzweigten $C_8$- und/oder $C_9$-Alkylrest darstellt.

Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate A können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (Ia) in wäßrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ie), eingesetzt. Zur Regulierung des Molekulargewichts können Kettenabbrecher z. B. der Formel (If) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wäßrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ie) können auch deren Mono- und/oder Bis-chlorkohlensäureester mitverwendet werden, wobei diese in organischen Lösungsmitteln gelöst zugegeben geben werden. Die Menge an Kettenabbrechern sowie an Verzweigern richtet sich dann nach der molaren Menge von Diphenolat-Resten entsprechend Formel (Ia) und gegebenenfalls Formel (Ie); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise NaOH-Lösung. Die Herstellung der Polycarbonate A nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonate A können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonate A haben bevorzugt Molekulargewicht $\overline{M}_w$ (Gewichtsmittel, ermittelt durch Gelchromatographie nach vorheriger Eichung) von mindestens 10 000, besonders bevorzugt von 20 000 bis 300 000 und insbesondere von 20 000 bis 80 000. Sie können linear oder verzweigt sein, sie sind Homopolycarbonate oder Copolycarbonate auf Basis der Diphenole der Formel (Ia).

Durch den Einbau der Diphenole der Formel (Ia) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole der Formel (Ia), in denen m 4 oder 5 ist und ganz besonders für die Polycarbonate auf Basis der Diphenole (Ib), worin $R^1$ und $R^2$ unabhängig voneinander die für die Formel (Ia) genannte Bedeutung haben und besonders bevorzugt Wasserstoff sind.

Die besonders bevorzugten Polycarbonate A sind also solche, in denen Struktureinheiten der Formel (I) m = 4 oder 5 ist ganz besonders solche aus Einheiten der Formel (Ig)

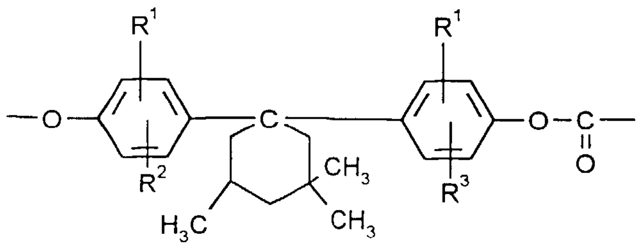

(Ig),

worin $R^1$ und $R^2$ die für Formel (I) genannte Bedeutung haben, besonders bevorzugt aber Wasserstoff sind.

Diese Polycarbonate auf Basis der Diphenole der Formel (Ib), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Komposition mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-% und ganz besonders von 100 Mol-% bis 50 Mol-%, bezogen auf die Gesamtmenge von 100 Mol-% an Diphenoleinheiten, in Polycarbonaten enthalten.

Halogenfreie Lösungsmittel (B) sind insbesondere aliphatische, cycloaliphatische, aromatische Kohlenwasserstoffe, wie Toluol, Xylol; Ketone, wie Aceton, Methylisobutylketon, Isophoron, Butanon; Ester, wie Methylacetat, Ethylacetat, Butylacetat, Methoxypropylacetat.

Bevorzugte Lösungsmittel sind:
Toluol, Xylol, Essigsäuremethylester, Essigsäureethylester, Methylisobutylketon, Butanon, Methoxypropylacetat.

Ganz besonders bevorzugt sind:
Toluol, Xylol, Essigsäureester, Methylethylketon.

**<u>Beispiel</u>**

Zur Veranschaulichung der Erfindung wurde eine Siebdruckfarbe folgender Zusammensetzung:

12 Gew.-Teile Pigmente, Füllstoffe, Hilfsmittel
30 Gew.-Teile Polycarbonat der Struktur:

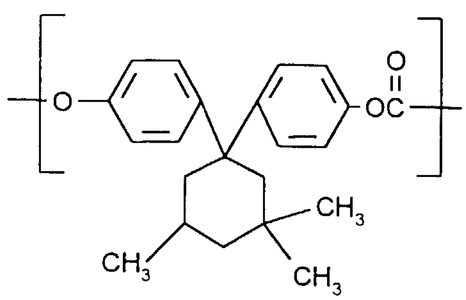

(Ia),

mit einem Molekulargewicht $\overline{M}_w$ von 47 000
58 Gew.-Teile Solvesso 100, KW-Lösungsmittel der Fa. Esso

hergestellt und damit eine Polycarbonatfolie bedruckt. Die so bedruckte Folie wurde in ein Spritzgießwerkzeug eingelegt und mit Polycarbonat bei 300°C hinterspritzt. Das Farbdruckmuster blieb kontrastreich (kein Anschmelzen der Siebdruckfarbe) und besaß eine hohe Haftung zum Polycarbonat.

Ein gleich gutes Ergebnis wurde auch mit einem Copolycarbonat der Struktur:

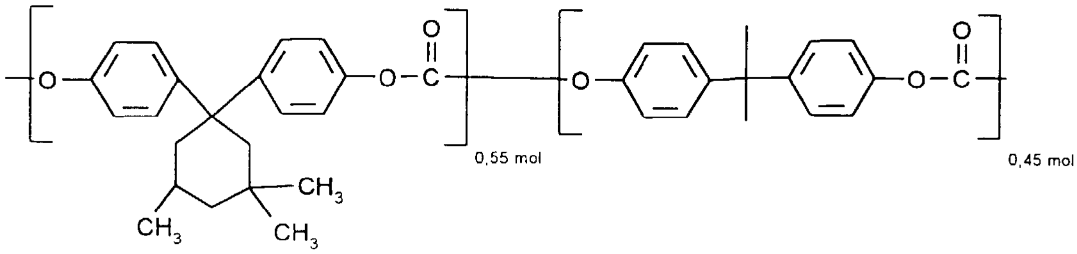

mit einem Molekulargewicht $\overline{M}_w$ von 37 000 erzielt.

Bei einem Vergleichsversuch mit einer Siebdruckfarbe, die ein Polyacrylat als Bindemittel enthielt, wurde das Farbdruckmuster verwischt.

**Patentansprüche**

1. Hochtemperaturbeständige flexible Siebdruckfarben enthaltend als Bindemittel thermoplastisches aromatisches Polycarbonat mit Molekulargewicht $\overline{M}_w$-(Gewichtsmittel) von mindestens 10 000, das bifunktionelle Carbonatstruktureinheiten der Formel (I) enthält

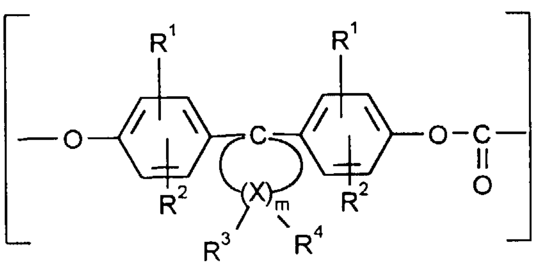 (I)

worin

| | |
|---|---|
| $R^1$ und $R^2$ | unabhängig voneinander Wasserstoff, Halogen, $C_1$-$C_8$-Alkyl, $C_5$-$C_6$-Cycloalkyl, $C_6$-$C_{10}$-Aralkyl, |
| m | eine ganze Zahl von 4 bis 7, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X, $R^3$ und $R^4$ gleichzeitig Alkyl bedeuten und vorzugsweise halogenfreie Lösungsmittel bzw. Lösungsmittelgemische.

2. Siebdruckfarben nach Anspruch 1, worin das aromatische Polycarbonat mindestens 30 Mol-% der bifunktionellen Carbonatstruktureinheit der Formel (I) enthält.

3. Siebdruckfarben nach Anspruch 1, worin das aromatische Polycarboant ein Molekulargewicht $\overline{M}_w$-(Gewichtsmittel) von 10 000 bis 300 000 aufweist.

4. Siebdruckfarben nach Anspruch 1, enthaltend als Lösungsmittel aromatische Kohlenwasserstoffe, Ketone, Ester, Ether, Alkohole oder Phenole.

5. Verwendung der Siebdruckfarben nach Anspruch 1 zum Dekorieren von Spritzgießteilen durch Hinterspritzung bei Temperaturen oberhalb von 280°C, wobei als Spritzgießmaterial vorzugsweise Polycarbonat verwendet wird.

## Claims

1. High temperature resistant, flexible screen printing inks containing, as binder, a thermoplastic aromatic polycarbonate with a molecular weight $\overline{M}_w$ (weight average) of at least 10 000 which contains bifunctional carbonate structural units of the formula (I)

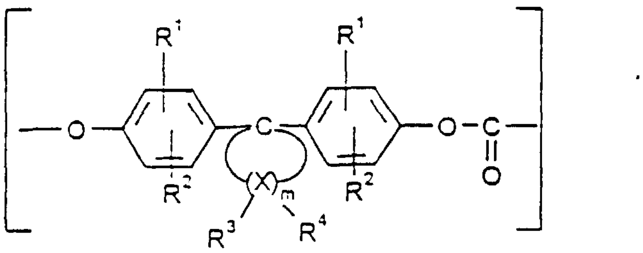

(I)

in which

| | |
|---|---|
| $R^1$ and $R^2$, | independently, represent hydrogen, halogen, a $C_1$-$C_8$-alkyl, $C_5$-$C_6$-cycloalkyl or $C_6$-$C_{10}$-aralkyl group, |
| m | is a number from 4 to 7, |
| $R^3$ and $R^4$ | can be individually selected for each X and, independently, represent hydrogen or a $C_1$-$C_6$-alkyl group and |
| X | represents carbon, |

with the proviso that $R^3$ and $R^4$ simultaneously represent an alkyl group on at least one atom X, and preferably halogen-free solvents or solvent mixtures.

2. Screen printing inks according to Claim 1, in which the polycarbonate contains at least 30 mol.% of the bifunctional aromatic carbonate structural unit of the formula (I).

3. Screen printing inks according to Claim 1, in which the aromatic polycarbonate has a molecular weight $\overline{M}_w$ (weight average) of 10 000 to 300 000.

4. Screen printing inks according to Claim 1 containing, as solvent, aromatic hydrocarbons, ketones, esters, ethers, alcohols or phenols.

5. Use of the screen printing inks according to Claim 1 to decorate injection moulded parts by back spraying at temperatures above 280°C, wherein polycarbonate is preferably used as the injection moulding material.

## Revendications

1. Encres pour sérigraphie flexibles, résistant à des températures élevées, contenant à titre de liant un polycarbonate aromatique thermoplastique possédant un poids moléculaire $\overline{M}_w$ (moyenne pondérale) d'au moins 10.000, qui contient des unités de structures de carbonate bifonctionnelles répondant à la formule (I)

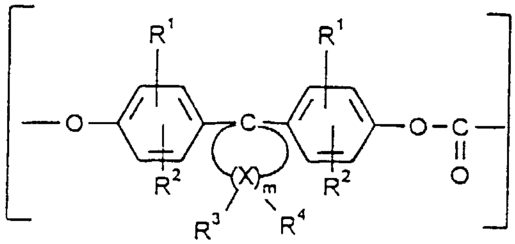

(I)

dans laquelle

$R^1$ et $R^2$ représentent, indépendamment l'un de l'autre, un atome d'hydrogène, un atome d'halogène, un groupe alkyle en $C_1$-$C_8$, un groupe cycloalkyle en $C_5$-$C_6$, un groupe aralkyle en $C_6$-$C_{10}$,

m représente un nombre entier de 4 à 7,

$R^3$ et $R^4$ représentent, pour chaque X qui peut être sélectionné de manière individuelle, indépendamment l'un de l'autre, un atome d'hydrogène ou un groupe alkyle en $C_1$-$C_6$, et

X représente un atome de carbone,

avec cette mesure que, sur au moins un atome de X, $R^3$ et $R^4$ représentent simultanément un groupe alkyle, et de préférence
des solvants, respectivement des mélanges de solvants exempts d'atomes d'halogène.

2. Encres pour sérigraphie selon la revendication 1, dans lesquelles le polycarbonate aromatique contient l'unité de structure de carbonate bifonctionnelle de formule (I) à concurrence d'au moins 30 moles %.

3. Encres pour sérigraphie selon la revendication 1, dans lesquelles le polycarbonate aromatique présente un poids moléculaire $\overline{M}_w$ (moyenne pondérale) de 10.000 à 300.000.

4. Encres pour sérigraphie selon la revendication 1, contenant à titre de solvant des hydrocarbures aromatiques, des cétones, des esters, des éthers, des alcools ou des phénols.

5. Utilisation des encres pour sérigraphie selon la revendication 1, pour la décoration d'éléments moulés par injection sur la face dorsale (de la partie décorative) à des températures supérieures à 280°C, dans laquelle on utilise, à titre de matière de moulage par injection, de préférence du polycarbonate.